# EUROPEAN PATENT SPECIFICATION

(11) **EP 2 437 447 B1**
(45) Date of publication and mention of the grant of the patent: **08.07.2015**
(21) Application number: 10780015.3
(22) Date of filing: 06.04.2010
(51) Int. Cl.: H04L 12/58, H04L 29/06, H04W 88/18, H04W 4/12

(54) **MULTIMEDIA MESSAGE FORWARDING METHOD, DEVICE AND SYSTEM THEREOF**
VERFAHREN ZUR WEITERLEITUNG VON MULTIMEDIA-NACHRICHTEN SOWIE GERÄT UND SYSTEM DAFÜR
PROCÉDÉ DE TRANSMISSION DE MESSAGE MULTIMÉDIA, DISPOSITIF ET SYSTÈME CORRESPONDANTS

(30) Priority: 27.05.2009 CN 200910143077
(43) Date of publication of application: 04.04.2012
(73) Proprietor: ZTE Corporation, Shenzhen, Guangdong 518057 (CN)
(72) Inventor: WANG, Guocai, Guangdong 518057 (CN)
(74) Representative: Bongiovanni, Simone
(86) International application number: PCT/CN2010/071566
(87) International publication number: WO 2010/135933

(56) References cited:
- CN-A- 1 716 917
- CN-A- 101 056 425
- CN-A- 101 572 871
- CN-A- 101 572 871
- CN-A- 101 583 096
- JP-A- 2006 042 287
- US-A1- 2002 065 892
- US-A1- 2003 095 550
- US-A1- 2007 174 401
- US-A1- 2008 077 676

## Description

### Field of the Invention

The present invention relates to the technical field of mobile communication, in particular to a method, an apparatus and a system for dispatching a multimedia message service (abbreviated as MMS) message.

### Background of the Invention

With the development of the multimedia message service, more and more manufacturers start to provide for users a service for customizing the MMS, wherein, a mobile newspaper is one of services provided by the MMS service provider (abbreviated as SP), which is most widely used and most rapidly extended at present.

Taking the mobile newspaper as an example, in the existing network, a same MMS message submitted by a mobile phone can be massively sent to 9999 users at most, however, with the rapid increment of the number of the users of the mobile newspaper (or other MMS), if it is required to send the same MMS message to all mobile newspaper users, it is needed to repeatedly send a plurality of MMS messages with 9999 destination users, but the message body of each MMS message is the same. Because the message body of an MMS messages is relatively large, continuously and repeatedly sending MMS messages for multiple times will result in a big service impact on a multimedia message service gateway (abbreviated as MMSG) for a long period of time.

Furthermore, by means of the above-mentioned MMS message mass sending method in the prior art, if a message is sent to 99999 destination users at one time, the message body will exceed a size set by all the current network element systems, and thus will result in a failure in sending the message.

Document US 2002/065892 relates to the storage and maintenance of e-mail attachment files in an e-mail communications server, and more particularly, to a method and apparatus for reducing the number of copies of identical attachment files stored in the e-mail communications server.

Document JP 2006 042287 provides a mail server capable of effectively solving trouble of double distribution of electronic mail.

Document US 2008/077676 relates generally to an improved data processing system and in particular to a method and apparatus for processing messages. More particularly, it relates to a computer implemented method, apparatus, and computer usable program code for managing attachments for electronic mail messages.

While mentioned documents US 2002/065892, JP 2006 042287 and US 2008/077676 provide respective technical solutions, the above mentioned problem still remains unsolved.

### Summary of the Invention

In view of the problem that an MMS message may fail to be sent due to destination user data of the MMS message being relatively large, the present invention provides an MMS message dispatching solution to at least solve the above-mentioned problem.

According to one aspect of the present invention, there is provided a method for dispatching an MMS message.

The method for dispatching an MMS message according to the present invention includes: a multimedia message service gateway (MMSG) receiving an MMS submission message sent by a sending party, wherein the MMS submission message carries an identification indicating whether it is the first time for the sending party to send the MMS message submitted by the MMS submission message; and the MMSG determining whether it is the first time for the sending party to send the MMS message according to the identification, wherein if yes, it executes step 1, otherwise, executes step 2, wherein step 1, storing a message body of the MMS message, generating a first-sent-message identification, returning the first-sent-message identification to the sending party, and establishing a corresponding relationship between the first-sent-message identification and the message body, then executing step 3; step 2, acquiring a first-sent-message identification carried in the MMS submission message, acquiring the message body corresponding to the first-sent-message identification according to the stored corresponding relationship between the stored first-sent-message identification and the message body, then executing step 3; and step 3, the MMSG sending the MMS message containing the message body to a multimedia message service center (MMSC).

According to another aspect of the present invention, there is provided an apparatus for dispatching an MMS message, which is located in an MMSG

The apparatus for dispatching an MMS message according to the present invention includes: a reception module, a determination module, a generation module, a storage module, a first sending module, an acquisition module and a second sending module, wherein the reception module is configured to receive an MMS submission message sent by a sending party, wherein the MMS submission message carries an identification indicating whether it is the first time for the sending party to send the MMS message submitted by the MMS submission message; the determination module is configured to determine whether it is the first time for the sending party to send the MMS message according to the identification carried in the MMS submission message, wherein if yes, it starts a generation module, otherwise, starts an acquisition module; the generation module is configured to generate a first-sent-message identification; the storage module is configured to store a corresponding relationship between the first-sent-message identification generated by the generation module and a message body of the MMS message submitted by the MMS submission message received by the reception module; the first sending module is configured to send the first-sent-message identification generated by the generation module to the sending party; the acquisition module is configured to acquire, according to the first-sent-message identification carried in the MMS submission message, the message body corresponding to the first-sent-message identification stored by the storage module; and the second sending module is configured to send the MMS message containing the message body to a multimedia message service center (MMSC).

According to a further aspect of the present invention, there is provided a system for dispatching an MMS message.

The system for dispatching the MMS message according to the present invention includes: a sending party, configured to submit an MMS submission message for sending an MMS message to one or more destination users, wherein if it is the first time to send the MMS message, then the MMS submission message carries an identification indicating that it is the first time to send the MMS message, and the MMS submission message comprises a message body of the MMS message, and if it is not the first time to send the MMS message, then the MMS submission message carries an identification indicating that the MMS message has been sent already and a first-sent-message identification, but does not comprise the message body of the MMS message, wherein the first-sent-message identification corresponds to the message body of the MMS message which is submitted by the MMS submission message for the first time; and a multimedia message service gateway (MMSG), configured to receive and process the MMS submission message submitted by the sending party, wherein in the case that it is the first time to receive the MMS message submitted by the MMS submission message, the MMSG stores the message body of the MMS message, generates the first-sent-message identification, returns the first-sent-message identification to the sending party, establishes a corresponding relationship between the first-sent-message identification and the message body, and sends the MMS message to a multimedia message service center (MMSC); and in the case that it is not the first time to receive the MMS message submitted by the MMS submission message, the MMSG acquires the first-sent-message identification carried in the MMS submission message and the message body corresponding to the first-sent-message identification, re-packets the MMS message, and sends the re-packeted MMS message to the MMSC

By means of at least one of the above solutions of the present invention, when sending the MMS message for the first time, the sending party submits the message body of the MMS message, which is not required to be submitted for the subsequent sending of the MMS message, so as to solve the problem that the MMS message may fail to be sent due to destination users data of the MMS message being relatively large, and lighten service processing burden of the MMSG.

Other features and advantages of the present invention will be detailed later in the specification, and partly obvious from the description, or can be understood through implementing the present invention. The purposes and other advantages of the present invention can be achieved and obtained through the structure specified by the specification, claims and drawings.

### Brief Description of the Drawings

Drawings are provided for the further understanding of the present invention and form a part of the specification, which are used to explain the present invention together with embodiments of the present invention rather than limit the present invention, wherein:
Fig.1 is a flow chart of the method for dispatching an MMS message according to an embodiment of the present invention;
Fig.2 is a flow chart of the method for dispatching a mobile newspaper according to an embodiment of the present invention;
Fig.3 is a structural schematic diagram of the apparatus for dispatching an MMS message according to an embodiment of the present invention;
Fig.4 is a structural schematic diagram of a service processor according to an embodiment of the present invention; and
Fig.5 is a structural schematic diagram of the system for dispatching an MMS message according to an embodiment of the present invention.

### Detailed Description of the Embodiments

In view of the problem that failures in sending the MMS message may occur in the case of the amount of destination users of an MMS message being considerably large when in the prior art it is required to send the message body of one MMS message each time of sending the MMS message, the embodiments of the present invention provide an improved solution for dispatching an MMS message. In the embodiments of the present invention, in order to optimize the processing procedure and complete the message processing of the MMS as soon as possible while reducing the impact on the service amount of the MMSG and other gateways in the existing network as much as possible, the sending party sends the message body of the MMS message only when submitting the MMS message for the first time; when receiving the MMS message submitted by the sending party for the first time, the MMSG acquires the message body of the MMS message, generates a first-sent-message identification corresponding to the message body, then sends a response message carrying the first-sent-message identification to the sending party, performs processes on the received MMS message according to existing procedures, and finally sends the MMS message to the MMSC; the sending party subsequently submits the MMS message without the message body, and sends an MMS submission message carrying the received first-sent-message identification; after receiving the MMS submission message, the MMSG acquires the first-sent-message identification carried in the MMS submission message so as to acquire the message body corresponding to the first-sent-message identification, re-packets the MMS message, and then performs normal service processing procedures to send the MMS message to the MMSC.

The embodiments and features therein in the present application can be combined with each other in the case of no confliction.

Preferred embodiments of the present invention will be described with reference to drawings, and it should be appreciated that preferred embodiments described herein are used to describe and explain the present invention rather than limit the present invention.

According to an embodiment of the present invention, firstly there is provided a method for dispatching an MMS message.

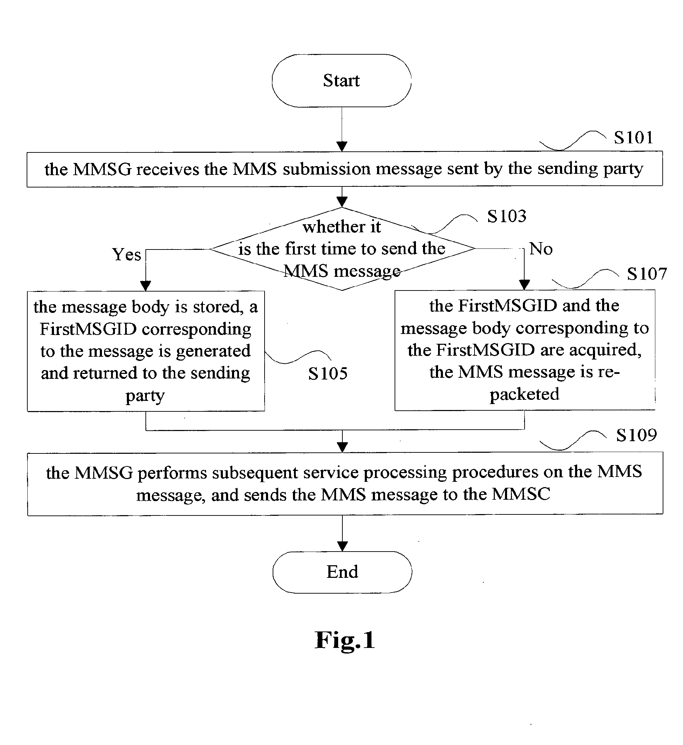

Fig.1 is a flow chart of the method for dispatching an MMS message according to an embodiment of the present invention. As shown in Fig.1, the method for dispatching an MMS mainly according to the embodiment of the present invention mainly includes the steps (Step S101-Step S109) as follows.

Step S101: an MMSG receives an MMS submission message sent by a sending party, wherein the MMS submission message carries identification for indicating whether it is the first time for the sending party to send the MMS message submitted by the MMS submission message.

In the process of a specific implementation, the sending party can send to the MMSG the MMS submission message carrying information of the submitted MMS message such as the message body, destination users, etc.. Meanwhile, in the embodiment of the present invention, the MMS submission message also carries the identification indicating whether it is the first time for the sending party to send the MMS message.

Step S103: the MMSG determines whether it is the first time for the sending party to send the MMS message according to the above identification, wherein if yes, step S105 is executed; otherwise, step S107 is executed.

Step S105: the MMSG stores the received message body of the MMS message, generates a first-sent-message identification (FirstMSGID), returns the FirstMSGID to the sending party, and establishes a corresponding relationship between the FirstMSGID and the above message body, then step S109 is executed.

When the sending party is sending the MMS message, if it is the first time to send the MMS message, then the submitted MMS submission message carries the message body of the MMS message, and the MMS submission message also carries an identification which indicates it is the first time to send the MMS message.

When determining that it is the first time for the sending party to send the MMS message, the MMSG extracts the message body of the MMS message from the MMS submission message, then generates one FirstMSGID corresponding to the message body, and sends the FirstMSGID to the sending party via a response message, which enables the sending party to carry the FirstMSGID in the MMS submission message when the sending party sends the MMS message next time, so as to enable the MMSG to acquire the message body corresponding to the FirstMSGID.

Specifically, a field can be added in the response message by extending the interface between the sending party and the MMSG, and the FirstMSGID can be carried via the field.

Furthermore, in order to save memory space, a valid period can be set for the corresponding relationship between the FirstMSGID and the message body, and after the valid period expires, the stored FirstMSGID and message body are deleted.

Furthermore, in the process of a specific implementation, in order to share the memory, the corresponding relationship between the FirstMSGID and the message body can be stored via a message storing queue, and after the valid period expires, the stored FirstMSGID and message body are deleted.

Step S107: the FirstMSGID carried in the received MMS submission message is acquired, the message body corresponding to the FirstMSGID is acquired according to the stored corresponding relationship between the FirstMSGID and the message body, the MMS message is re-packeted, and then step S109 is executed.

If it is not the first time for the sending party to send the MMS message, when submitting the MMS message next time, the sending party sends the MMS submission message carrying the received FirstMSGID, and the MMS submission message does not include the message body.

Step S109: the MMSG performs subsequent service processing procedures on the MMS message, and sends the MMS message to the MMSC.

In the process of a specific implementation, the MMSG can process the MMS message including the message body based on the existing service processing procedures, for example, the MMSG can group the destination users according to addresses of the destination users, each group of destination users are processed by one MMSC, then addresses of the group of destination users and the MMS message are sent to the MMSC by which the MMS message is sent to the group of destination users.

In the process of a specific implementation, by extending the interface between the sending party and the MMSG, a field for indicating the message type can be added into the MMS submission message submitted by the sending party. When the sending party submits the MMS message, the identification for indicating whether it is the first time to send the MMS message can be carried via the field. For example, the field can be set as 3 values, wherein 0 indicates that the MMS message being sent currently is a common message; 1 indicates that the MMS message being sent currently is the first message whose message body needs to be reused (i.e., the MMS submission message includes both the message body of the MMS message and the information of the receiving parties of the MMS message); 2 indicates that the MMS message being sent currently is a subsequent message (i.e., the subsequent message of the MMS message whose message body has been sent). The default value of the field is 0.

In Steps S101-S109 of the embodiment of the present invention, the number of the destination users of the MMS message sent each time is less than or equal to 9999, and preferably equal to 9999.

In the process of a specific implementation, for a multimedia message service with a relatively large mass sending amount, by performing configuration in a load equalizer (e.g., load equalizer F5) in the MMSG apparatus group, the multimedia message service can be processed separately by a service processor in the MMSG apparatus group, i.e., the method of the embodiment of the present invention is implemented by the service processor in the MMSG In the process of a specific implementation, a mapping port, which is different from the existing mapping port of the MMSG, can be provided for the service processor. When submitting the MMS message, the sending party can designate a port of the MMSG as the mapping port, and sends the MMS message to the service processor by which the method provided by the embodiment of the present invention can be implemented.

According to the above method provided by the embodiment of the present invention, when massively sending the MMS message, because it is required carry the message body only when submitting the MMS message for the first time, and it is not required to send the message body of the MMS message during the subsequent submission of the MMS message, thus service processing burden of the MMSG can be lightened. Even if an MMS message is required to be sent to 99999 users, it will not exceed the size set by all current network element systems to fail the message sending.

In order to further understand the method for dispatching the MMS message provided by the embodiments of the present invention, taking the mobile newspaper as an example, the specific implementation process of the method for dispatching the MMS message provided by the embodiments of the present invention will be described below.

In the present embodiment, it is required to extend the interface protocol MM7 interface of the SP and the MMSG, and add two fields as follows.

Field 1: Submit Continued, optional, which represents message type. The field is used for carrying the identification indicating whether it is the first time for the sending party to send the MMS message. The field is mapped into the HEAD part of the Simple Object Access Protocol (abbreviated as SOAP) during the MM7 interface mapping process. The field is called SubmitContinued in the present embodiment. The field can be set as 3 values, wherein, 0 indicates a common message; 1 indicates the first message whose message body needs to be reused (i.e., the message including both the message body of the MMS message and the information of the receiving parties); and 2 indicates a subsequent message (i.e., the subsequent message of the MMS message whose message body has been sent). In the case of the field being blank, the default value of the filed is 0.

Field 2: optional, it is used in the case that the same multimedia message is submitted many times. The field is used in the corresponding message returned to the sending party by the MMSG, and used when the sending party sends the same MMS message for the second time. When successfully receiving and processing the first MMS submission message (MM7_submit.REQ), the MMSG fills in the response message (MM7_submit.RES) with the message ID field (i.e., FirstMSGID) allocated by the MMSG In the subsequent process of submitting the same multimedia message, the sending party (a mobile newspaper sending center in the present embodiment) utilizes this field to identify the MMS content. The field is required only in the case that the SubmitContinued field is 2. That is, for the second and subsequent MMS submission messages, if SubmitContinued of the MMS submission message is equal to 2, then the MMS submission message must carry the above first-sent-message identification (i.e., FirstMSGID).

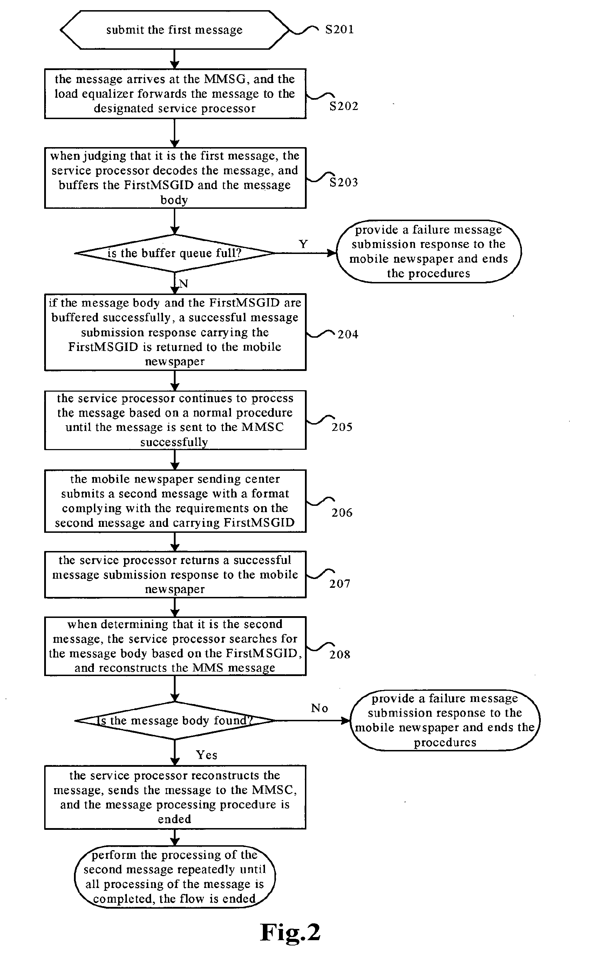

Fig.2 is a flow chart of the method for dispatching a mobile newspaper according to an embodiment of the present invention. As shown in Fig.2, the method for dispatching the mobile newspaper according to the embodiment of the present invention mainly includes the steps as follows.

Step S201: the mobile newspaper sending center sends an MMS submission message for submitting the mobile newspaper, wherein because it is the first time to submit the mobile newspaper, the number of destination addresses of the mobile newspaper does not exceed 9999, and the MMS submission message includes the message body of the mobile newspaper, furthermore, the value of SubmitContinued field of the MMS submission message is 1.

Herein, the MMSG serving port for the mobile newspaper submitted by the mobile newspaper sending center is a specific mapping port which is set different from those provided to other SPs.

Step S202: after the MMSG receives the MMS submission message sent by the mobile newspaper sending center, the load equalizer within the network of the MMSG directly sends the MMS submission message to a designated service processor (Relay) to be processed.

Step S203: the service processor decodes the received MMS submission message, generates a FirstMSGID (i.e., the first-sent-message identification), and buffers the FirstMSGID together with the message body.

If the current buffer is full, then the mobile newspaper sending center is prompted to submit a common message via a status code in the response returned to the mobile newspaper sending center, wherein the common message does not include the field SubmitContinued.

Step S204: the service processor returns to the mobile newspaper sending center a response message which carries newly generated FirstMSGID.

Specifically, the newly generated FirstMSGID can be carried in the field 2 of the response message.

Step S205: the service processor continues to employ normal procedures of the prior art to process the mobile newspaper which is submitted for the first time until it is dispatched to the MMSC.

For example, if the number of destination users of the mobile newspaper submitted by the mobile newspaper sending center is 9000, then the service processor divides the 9000 destination users into three groups according to the information of the 9000 destination users, wherein the mobile newspaper to be sent to the first group of destination users is to be sent by the MMSC A, the mobile newspaper to be sent to the second group of destination users is to be sent by the MMSC B, and the mobile newspaper to be sent to the third group of destination users is to be sent by the MMSC C. Then the MMSG sends the mobile newspaper to MMSC A, MMSC B and MMSC C respectively, by which the mobile newspaper is sent to each destination user.

Step S206: the mobile newspaper sending center sends the MMS submission message for submitting the mobile newspaper the second time, wherein the MMS submission message does not include the message body of the mobile newspaper, moreover, the number of receiving numbers (i.e., destination users) of the mobile newspaper does not exceed 9999 as well, furthermore, the value of SubmitContinued field in the MMS submission message is 2, i.e., indicating that the mobile newspaper provided by the MMS submission message is the subsequent mobile newspaper, the message body of the mobile newspaper has been sent already. In this case, in order to enable the MMSG to learn which one of the mobile newspapers that have been sent already is the same as the mobile newspaper, it is required to fill in the MSGID (message identification) field of the MMS submission message with FirstMSGID (i.e., the first-sent-message identification) carried in the response message which is returned by the MMSG after the mobile newspaper is submitted for the first time.

Step S207: after the MMSG receives the MMS submission message which is sent for the second time, the load equalizer directly sends the MMS submission message to the service processor to be processed. After receiving the MMS submission message, the service processor returns to the mobile newspaper center a response message carrying a new MSGID, and the new MSGID will be utilized in the delivery report subsequently returned to the mobile newspaper sending center.

Step S208: if the service processor judges that the value of the SubmitContinued carried in the received MMS submission message is 2, then the service processor acquires FirstMSGID from the FirstMSGID field of the MMS submission message, and searches the message body corresponding to the FirstMSGID in the buffer, wherein if the message body is found, then the message body is copied and dispatched according to processing procedures of the MMS message of the prior art; and if the message body is not found, then a failure delivery report (the delivery report utilizes the generated new MSGID in step S207) is returned to the mobile newspaper sending center.

Steps S205-S207 are repeated until the mobile newspaper to be sent is dispatched to all destination users.

In addition, a valid period of the FirstMSGID and the message body buffered in the buffer can be configured, wherein if the MMS message corresponding to the message body submitted by the mobile newspaper sending center for the second time has not been received when the set valid period expires, then the buffered content will be deleted, and if the MMS submission message for submitting the MMS message for the second time arrives after the buffered content is deleted, then the MMSG will report an error and terminate the processing procedure of the MMS message sent for the second time.

Through the above embodiments, by employing the manner that the sending party submits the message body of the MMS message when sending the MMS message for the first time, and it is not required to submit the message body of the MMS message for the subsequent sending of the MMS message, network stability is increased, and performance and efficiency of the system are improved.

According to an embodiment of the present invention, there is also provided an apparatus for dispatching an MMS message, which is located in the MMSG, and corresponds to the above method embodiments where the explanations that have been provided already will not be described herein for simplicity.

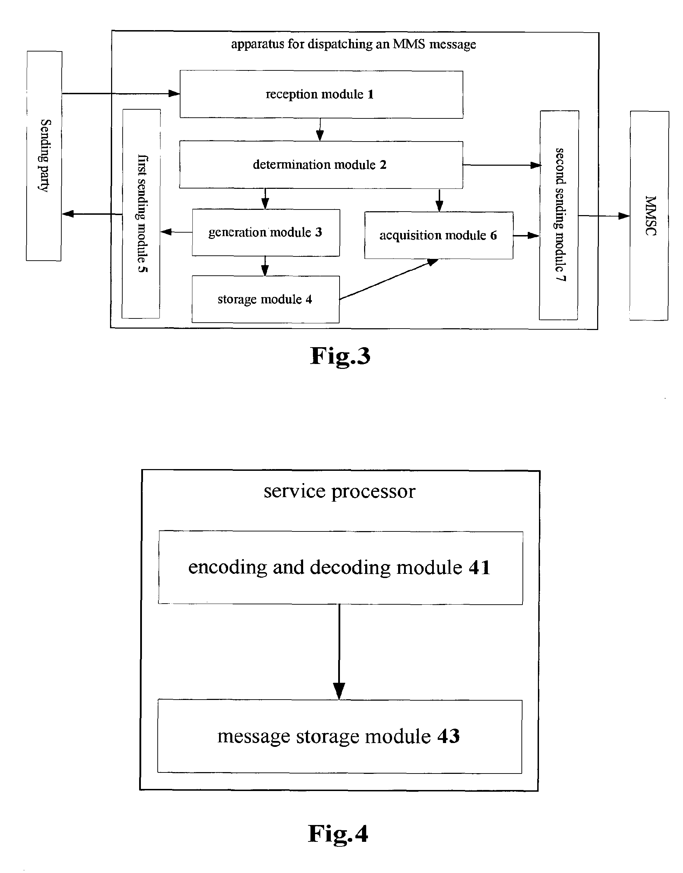

Fig.3 is a structural schematic diagram of the apparatus for dispatching the MMS message according to an embodiment of the present invention. As shown in Fig.3, the apparatus for dispatching the MMS message according to the embodiment of the present invention includes: a reception module 1, a determination module 2, a generation module 3, a storage module 4, a first sending module 5, an acquisition module 6 and a second sending module 7, wherein the reception module 1 is used to receive an MMS submission message sent by a sending party, wherein the MMS submission message carries an identification indicating whether it is the first time for the sending party to send the MMS message submitted by the MMS submission message; the determination module 2, which is connected with the reception module 1, is used to determine whether it is the first time for the sending party to send the MMS message according to the identification carried in the MMS submission message wherein if yes, it starts the generation module 3, otherwise, starts the acquisition module 6; the generation module 3, which is connected with the determination module 2, is used to generate a first-sent-message identification; the storage module 4, which is connected with the generation module 3, is used to store a corresponding relationship between the first-sent-message identification generated by the generation module 3 and a message body of the MMS message submitted by the MMS submission message received by the reception module; the first sending module 5, which is connected with the generation module 3, is used to send the first-sent-message identification generated by the generation module 3 to the sending party; the acquisition module 6, which is connected with the determination module 2 and the storage module 4, is used to acquire, according to the first-sent-message identification carried in the MMS submission message, the message body corresponding to the first-sent-message identification stored by the storage module 4; the second sending module 7, which is connected with the determination module 2 and the acquisition module 6, is used to send the MMS message containing the message body to the MMSC when the determination module 2 determines that it is the first time for the sending party to send the MMS message, and send the re-packeted MMS message to the MMSC according to the message body acquired by the acquisition module 6 when the determination module 2 determines that it is not the first time for the sending party to send the MMS message.

In the process of a specific implementation, the apparatus can be a service processor in the MMSG, and can be configured via the load equalizer in the MMSG apparatus group specifically. The serving port of the service processor can be configured with a separate mapping port through which the sending party communicates with the service processor, wherein the mapping port is different from other existing mapping ports. In the process of a specific implementation, in order to realize sending to the MMSG an identification indicating whether it is the first time for the sending party to send the MMS message, the interface protocol (protocol MM7) of the sending party and the MMSG can be extended by adding two fields to give indications. Reference can be made to above description of the method for particularities.

In the process of a specific implementation, the structure of the service processor can be seen in Fig.4. The service processor mainly includes: an encoding and decoding module 41 (corresponding to the determination module 2, the generation module 3 and the acquisition module 6 in Fig.3). The existing encoding and decoding module can be modified to be able to support the extended MM7 interface protocol, to judge that whether the MMS message submitted by the sending party is the first one (i.e., it is the first time to send the MMS message) or not (i.e., it is not the first time to send the MMS message), and to adopt different processing based on different judgment result, i.e., if it is the first time to send the MMS message, then the message body of the MMS message is acquired, an identification corresponding to the message body is generated and returned to the sending party, and if it is not the first time to send the MMS message, then the message body corresponding to the identification carried in the MMS submission message of the MMS message is acquired, and then the message body is re-packeted. The message storage module 43 is used for storing and extracting the message body and the above identification. Specifically, the message storage module 43 can store by means of a message body buffering queue the message body of the first message and the identification corresponding to the message body generated by the MMSG. Furthermore, the identification corresponds to the message body, meanwhile the valid period can also be set for the message body, the identification and the corresponding relationship between the message body and the identification, so that the outdated message body can be deleted.

According to an embodiment of the present invention, there is also provided a system for dispatching the MMS message, which corresponds to the method embodiments, where the explanations that have been described in the method embodiments will be omitted for simplicity, and the structure of the system is described as follows.

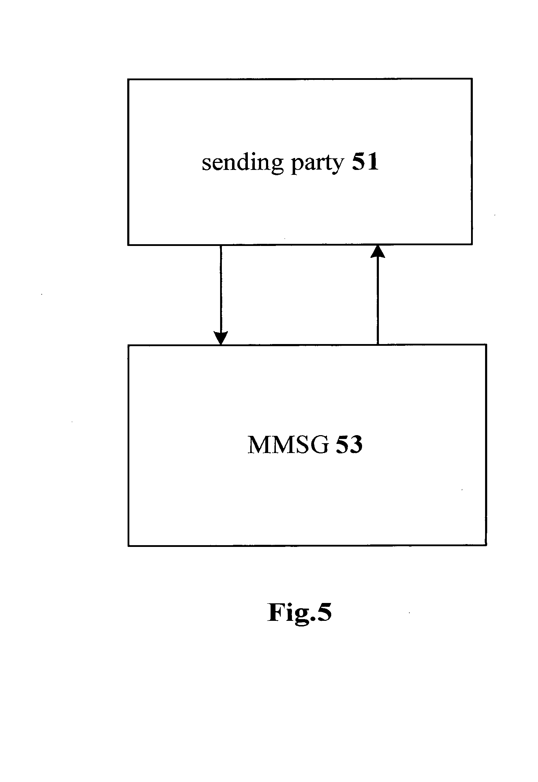

Fig.5 is a structural schematic diagram of the system for dispatching the MMS message according to an embodiment of the present invention. As shown in Fig.5, the system for dispatching the MMS message according to the embodiment of the present invention mainly includes: a sending party 51 and an MMSG 53, wherein the sending party 51 is used to submit an MMS submission message for sending an MMS message to one or more destination users, wherein if it is the first time to send the MMS message, then the MMS submission message carries an identification indicating that it is the first time to send the MMS message, and the MMS submission message comprises a message body of the MMS message, and if it is not the first time to send the MMS message, then the MMS submission message carries an identification indicating that the MMS message has been sent already and a first-sent-message identification, but does not comprise the message body of the MMS message, wherein the first-sent-message identification corresponds to the message body of the MMS message submitted by the MMS submission message for the first time; the MMSG 53 is used to receive and process the MMS submission message submitted by the sending party, wherein in the case that it is the first time to receive the MMS message submitted by the MMS submission message, the MMSG stores the message body of the MMS message, generates the first-sent-message identification, returns the first-sent-message identification to the sending party, establishes a corresponding relationship between the first-sent-message identification and the message body, and sends the MMS message to a multimedia message service center (MMSC); and in the case that it is not the first time (i.e. the second time, the third time, .....) to receive the MMS message submitted by the MMS submission message, the MMSG acquires the first-sent-message identification carried in the MMS submission message and the message body corresponding to the first-sent-message identification, re-packets the MMS message, and sends the re-packeted MMS message to the MMSC.

In summary, by means of the technical solution provided by the embodiments of the present invention, when sending the MMS message for the first time, the sending party submits the message body of the MMS message, which is not required to be submitted for the subsequent sending of the MMS message, so as to solve the problem that the MMS message may fail to be sent due to destination users data of the MMS message being relatively large, and lighten service processing burden of the MMSG. Furthermore, by employing the technical solution provided by the embodiments of the present invention, the number of destination users of the MMS message can exceed the limitation of 99999, and the MMS message can be sent to the destination users in any number without extending the serial number of telephone list. In addition, in the embodiments of the present invention, the multimedia message service can be processed by employing only one service processor of the MMSG with little modification made to other service processors, so as to enable the solution to expediently and concisely solve the problem of impact on the MMSG by mass MMS message services in the prior art.

The descriptions above are only the preferable embodiment of the present invention, which are not used to restrict the present invention. For those skilled in the art, the present invention may have various changes and variations. Any amendments, equivalent substitutions, improvements, etc. within the principle of the present invention are all included in the scope of the protection of the present invention as defined in the appended claims.

## Claims

1. A method for dispatching a multimedia message service (MMS) message, **characterized by** comprising:
a multimedia message service gateway (MMSG) receiving (S101) an MMS submission message sent by a sending party, wherein the MMS submission message carries an identification indicating whether it is the first time for the sending party to send the MMS message submitted by the MMS submission message; and
the MMSG determining (S103) whether it is the first time for the sending party to send the MMS message according to the identification, wherein if yes, it executes step 1, otherwise, executes step 2, wherein
step 1, storing a message body of the MMS message, generating a first-sent-message identification, returning the first-sent-message identification to the sending party, and establishing and storing a corresponding relationship between the first-sent-message identification and the message body, then executing step 3;
step 2, acquiring a first-sent-message identification carried in the MMS submission message, acquiring the message body corresponding to the first-sent-message identification according to the stored corresponding relationship between the stored first-sent-message identification and the message body, then executing step 3; and
step 3, the MMSG sending the MMS message containing the message body to a multimedia message service center (MMSC).

2. The method according to Claim 1, **characterized in that** before the step of the MMSG receiving the MMS submission message, the method further comprises:
the sending party submitting the MMS submission message for sending the MMS message to one or more destination users, wherein if it is the first time to send the MMS message, the sending party carries in the sent MMS submission message an identification indicating that it is the first time to send the MMS message, and the sent MMS submission message comprises the message body of the MMS message; otherwise
the sending party carries in the sent MMS submission message an identification indicating that the MMS message has been sent already, and carries the received first-sent-message identification in the MMS submission message, and the sent MMS submission message does not comprise the message body of the MMS message.

3. The method according to Claim 1, **characterized in that** the identification indicating that whether it is the first time for the sending party to send the MMS message is carried by adding a field for indicating a message type into the MMS submission message.

4. The method according to Claim 1, **characterized in that** the step of the MMSG generating the first-sent-message identification and returning the first-sent-message identification to the sending party comprises:
the MMSG generating the first-sent-message identification, and sending the first-sent-message identification to the sending party by carrying the first-sent-message identification in a response message.

5. The method according to Claim 1, **characterized in that** after the step of establishing the corresponding relationship between the first-sent-message identification and the message body, the method further comprises:
setting a valid period for the corresponding relationship between the first-sent-message identification and the message body, and after the valid period expires, deleting the corresponding relationship between the first-sent-message identification and the message body.

6. An apparatus for dispatching a multimedia message service (MMS) message which is located in a multimedia message service gateway (MMSG), **characterized in that** the apparatus comprises:
a reception module (1), configured to receive an MMS submission message sent by a sending party, wherein the MMS submission message carries an identification indicating whether it is the first time for the sending party to send the MMS message submitted by the MMS submission message;
a determination module (2), configured to determine whether it is the first time for the sending party to send the MMS message according to the identification carried in the MMS submission message, wherein if yes, it starts a generation module (3), otherwise, starts an acquisition module (6);
the generation module (3), configured to generate a first-sent-message identification;
a storage module (4), configured to store a corresponding relationship between the first-sent-message identification generated by the generation module (3) and a message body of the MMS message submitted by the MMS submission message received by the reception module (1);
a first sending module (5), configured to send the first-sent-message identification generated by the generation module (3) to the sending party;
the acquisition module (6), configured to acquire, according to the first-sent-message identification carried in the MMS submission message, the message body corresponding to the first-sent-message identification stored by the storage module (4); and
a second sending module (7), configured to send the MMS message containing the message body to a multimedia message service center (MMSC).

7. The apparatus according to Claim 6, **characterized in that** the apparatus is a service processor of the MMSG.

8. The apparatus according to Claim 6 or 7, **characterized in that** the service processor has a mapping port through which the sending party communicates with the service processor, and the mapping port is different from mapping ports of other service processors of the MMSG.

9. A system for dispatching a multimedia message service (MMS) message, **characterized in that** the system comprises:
a sending party (51), configured to submit an MMS submission message for sending an MMS message to one or more destination users, wherein if it is the first time to send the MMS message, then the MMS submission message carries an identification indicating that it is the first time to send the MMS message, and the MMS submission message comprises a message body of the MMS message, and if it is not the first time to send the MMS message, then the MMS submission message carries an identification indicating that the MMS message has been sent already and a first-sent-message identification, but does not comprise the message body of the MMS message, wherein the first-sent-message identification corresponds to the message body of the MMS message which is submitted by the MMS submission message for the first time; and
a multimedia message service gateway (MMSG) (53), configured to receive and process the MMS submission message submitted by the sending party (51), wherein in the case that it is the first time to receive the MMS message submitted by the MMS submission message, the MMSG (53) stores the message body of the MMS message, generates the first-sent-message identification, returns the first-sent-message identification to the sending party (51), establishes a corresponding relationship between the first-sent-message identification and the message body, and sends the MMS message to a multimedia message service center (MMSC); and in the case that it is not the first time to receive the MMS message submitted by the MMS submission message, the MMSG (53) acquires the first-sent-message identification carried in the MMS submission message and the message body corresponding to the first-sent-message identification, re-packets the MMS message, and sends the re-packeted MMS message to the MMSC.

## Patentansprüche

1. Verfahren zur Beförderung einer Nachricht des Multimedia-Nachrichtendienstes (MMS), **dadurch gekennzeichnet, dass** es umfasst:
Empfangen (S101) einer MMS-Übermittlungsnachricht, die von einem sendenden Partner gesendet wird, durch ein Multimedia Message Service Gateway (MMSG), wobei die MMS-Übermittlungsnachricht eine Identifikation befördert, die angibt, ob der sendende Partner die von der MMS-Übermittlungsnachricht übermittelte MMS-Nachricht das erste Mal sendet; und
Bestimmen (S103) durch das MMSG, ob der sendende Partner die MMS-Nachricht das erste Mal sendet, gemäß der Identifikation, wobei es, falls ja, den Schritt 1 ausführt und andernfalls den Schritt 2 ausführt, wobei
Schritt 1: Speichern eines Nachrichtenkörpers der MMS-Nachricht, Erzeugen einer erste-gesendete-Nachricht-Identifikation, Zurücksenden der erstegesendete-Nachricht-Identifikation an den sendenden Partner und Herstellen und Speichern einer entsprechenden Beziehung zwischen der erste-gesendete-Nachricht-Identifikation und dem Nachrichtenkörper, dann Ausführen von Schritt 3;
Schritt 2: Erfassen einer erste-gesendete-Nachricht-Identifikation, die in der MMS-Übermittlungsnachricht befördert wird, Erfassen des Nachrichtenkörpers, der zu der erste-gesendete-Nachricht-Identifikation gehört, gemäß der gespeicherten entsprechenden Beziehung zwischen der gespeicherten erste-gesendete-Nachricht-Identifikation und dem Nachrichtenkörper, dann Ausführen von Schritt 3; und
Schritt 3: Senden der MMS-Nachricht, die den Nachrichtenkörper enthält, an ein Multimedia Message Service Center (MMSC) durch das MMSG.

2. Verfahren nach Anspruch 1, **dadurch gekennzeichnet, dass** das Verfahren vor dem Schritt, in dem das MMSG die MMS-Übermittlungsnachricht empfängt, ferner umfasst:
Übermitteln der MMS-Übermittlungsnachricht zum Senden der MMS-Nachricht an einen oder mehrere Zielnutzer durch den sendenden Partner, wobei der sendende Partner, wenn es das erste Mal ist, dass die MMS-Nachricht gesendet wird, in der gesendeten MMS-Übermittlungsnachricht eine Identifikation befördert, die angibt, dass es das erste Mal ist, dass die MMS-Nachricht gesendet werden soll, und die gesendete MMS-Übermittlungsnachricht den Nachrichtenkörper der MMS-Nachricht enthält; andernfalls
Befördern einer Identifikation in der gesendeten MMS-Übermittlungsnachricht durch den sendenden Partner, welche angibt, dass die MMS-Nachricht bereits gesendet wurde, und Befördern der empfangenen erstegesendete-Nachricht-Identifikation in der MMS-Übermittlungsnachricht, wobei die gesendete MMS-Übermittlungsnachricht den Nachrichtenkörper der MMS-Nachricht nicht umfasst.

3. Verfahren nach Anspruch 1, **dadurch gekennzeichnet, dass** die Identifikation, die angibt, ob es das erste Mal ist, dass der sendende Partner die MMS-Nachricht sendet, befördert wird, indem ein Feld hinzugefügt wird, um einen Nachrichtentyp in die MMS-Übermittlungsnachricht einzufügen.

4. Verfahren nach Anspruch 1, **dadurch gekennzeichnet, dass** der Schritt, in dem das MMSG die erste-gesendete-Nachricht-Identifikation erzeugt und die erste-gesendete-Nachricht-Identifikation an den sendenden Partner zurück sendet, umfasst:
Erzeugen der erste-gesendete-Nachricht-Identifikation durch das MMSG und Senden der erste-gesendete-Nachricht-Identifikation an den sendenden Partner, indem die erste-gesendete-Nachricht-Identifikation in einer Antwortnachricht befördert wird.

5. Verfahren nach Anspruch 1, **dadurch gekennzeichnet, dass** das Verfahren nach dem Schritt des Herstellens der entsprechenden Beziehung zwischen der erste-gesendete-Nachricht-Identifikation und dem Nachrichtenkörper ferner umfasst:
Festlegen einer Gültigkeitszeitspanne für die entsprechende Beziehung zwischen der erste-gesendete-Nachricht-Identifikation und dem Nachrichtenkörper und Löschen der entsprechenden Beziehung zwischen der erste-gesendete-Nachricht-Identifikation und dem Nachrichtenkörper, nachdem die Gültigkeitszeitspanne abgelaufen ist.

6. Vorrichtung zur Beförderung einer Nachricht des Multimedia-Nachrichtendienstes (MMS), die in einem Multimedia Message Service Gateway (MMSG) angesiedelt ist, **dadurch gekennzeichnet, dass** die Vorrichtung umfasst:
ein Empfangsmodul (1), das konfiguriert ist, um eine MMS-Übermittlungsnachricht, die von einem sendenden Partner gesendet wird, zu empfangen, wobei die MMS-Übermittlungsnachricht eine Identifikation befördert, die angibt, ob der sendende Partner die von der MMS-Übermittlungsnachricht übermittelte MMS-Nachricht das erste Mal sendet; und
ein Bestimmungsrnodul (2), das konfiguriert ist, um gemäß der in der MMS-Übermittlungsnachricht beförderten Identifikation zu bestimmen, ob der sendende Partner die MMS-Nachricht das erste Mal sendet, wobei es, falls ja, ein Generierungsmodul (3) startet und andernfalls ein Erfassungsmodul (6) startet;
das Generierungsmodul (3), das konfiguriert ist, um eine erste-gesendete-Nachricht-Identifikation zu erzeugen;
ein Speichermodul (4), das konfiguriert ist, um eine entsprechende Beziehung zwischen der von dem Generierungsmodul (3) erzeugen erste-gesendete-Nachricht-Identifikation und einem Nachrichtenkörper der MMS-Nachricht, die von der von dem Empfangsmodul (1) empfangenen MMS-Übermittlungsnachricht übermittelt wird, zu erzeugen;
ein erstes Sendemodul (5), das konfiguriert ist, um die von dem Generierungsmodul (3) erzeugte erste-gesendete-Nachricht-Identifikation an den sendenden Partner zu senden;
das Erfassungsmodul (6), das konfiguriert ist, um gemäß der in der MMS-Übermittlungsnachricht beförderten erste-gesendete-Nachricht-Identifikation den zu der erste-gesendete-Nachricht-Identifikation gehörenden Nachrichtenkörper, der von dem Speichermodul (4) gespeichert ist, zu erfassen; und
ein zweites Sendemodul (7), das konfiguriert ist, um die MMS-Nachricht, die den Nachrichtenkörper enthält, an ein Multimedia Message Service Center (MMSC) zu senden.

7. Vorrichtung nach Anspruch 6, **dadurch gekennzeichnet, dass** die Vorrichtung ein Dienstprozessor des MMSG ist.

8. Vorrichtung nach Anspruch 6 oder 7, **dadurch gekennzeichnet, dass** der Dienstprozessor einen Abbildungsport hat, durch den der sendende Partner mit dem Dienstprozessor kommuniziert, und der Abbildungsport sich von den Abbildungsports anderer Dienstprozessoren des MMSG unterscheidet.

9. System zur Beförderung einer Nachricht des Multimedia-Nachrichtendienstes (MMS), **dadurch gekennzeichnet, dass** das System umfasst:
einen sendenden Partner (51), der konfiguriert ist, um eine MMS-Übermittlungsnachricht zum Senden einer MMS-Nachricht an einen oder mehrere Zielbenutzer zu iäbermitteln, wobei die MMS-Übermittlungsnachricht, wenn die MMS-Nachricht das erste Mal gesendet wird, eine Identifikation befördert, die angibt, dass die MMS-Nachricht das erste Mal gesendet wird, und die MMS-Übermittlungsnachricht einen Nachrichtenköper der MMS-Nachricht umfasst, und die MMS-Übermittlungsnachricht, wenn es nicht das erste Mal ist, dass die MMS-Nachricht gesendet wird, eine Identifikation, die angibt, dass die MMS-Nachricht bereits gesendet wurde, und eine erste-gesendete-Nachricht-Identifikation befördert, aber den Nachrichtenkörper der MMS-Nachricht nicht umfasst, wobei die erste-gesendete-Nachricht-Identifikation dem Nachrichtenkörper der MMS-Nachricht entspricht, der von der MMS-Übermittlungsnachricht das erste Mal übermittelt wird; und
ein Multimedia Message Service Gateway (MMSG) (53), das konfiguriert ist, um die MMS-Übermittlungsnachricht, die von dem sendenden Partner (51) übermittelt wird, zu empfangen und zu verarbeiten, wobei das MMSG (53) in dem Fall, dass es das erste Mal ist, dass die von der MMS-Übermittlungsnachricht übermittelte MMS-Nachricht empfangen wird, den Nachrichtenkörper der MMS-Nachricht speichert, die erste-gesendete-Nachricht-Identifikation erzeugt, die erste-gesendete-Nachricht-Identifikation an den sendenden Partner (51) zurück schickt, eine entsprechende Beziehung zwischen der erste-gesendete-Nachricht-Identifikation und dem Nachrichtenkörper herstellt und die MMS-Nachricht an ein Multimedia Message Service Center (MMSC) sendet; und das MMSG (53) in dem Fall, dass es nicht das erste Mal ist, dass die von der MMS-Übermittlungsnachricht übermittelte MMS-Nachricht empfangen wird, die in der MMS-Übermittlungsnachricht beförderte erste-gesendete-Nachricht-Identifikation und den Nachrichtenkörper, der zu der ersten erste-gesendete-Nachricht-Identifikation gehört, erfasst, die MMS-Nachricht neu paketiert und die neu paketierte MMS-Nachricht an das MMSC sendet.

## Revendications

1. Procédé de distribution d'un message de service de messages multimédias (MMS), **caractérisé en ce qu'**il comprend :
une passerelle de service de messages multimédias (MMSG) recevant (S101) un message de dépôt MMS envoyé par un expéditeur, le message de dépôt MMS transportant une identification indiquant si c'est la première fois que l'expéditeur envoie le message MMS déposé par le message de dépôt MMS ; et
la MMSG détermine (S103) si c'est la première fois que l'expéditeur envoie le message MMS conformément à l'identification, et si c'est le cas, elle exécute l'étape 1, sinon, elle exécute l'étape 2, où
l'étape 1 consiste à stocker un corps de message du message MMS, à générer une identification premier message envoyé, à renvoyer l'identification premier message envoyé à l'expéditeur, et à établir ainsi qu'à stocker une relation correspondante entre l'identification premier message envoyé et le corps de message, puis à exécuter l'étape 3 ;
l'étape 2 consiste à obtenir une identification premier message envoyé transportée dans le message de dépôt MMS, à obtenir le corps de message correspondant à l'identification du premier message envoyé conformément à la relation correspondante stockée entre l'identification premier message envoyé stockée et le corps de message, puis à exécuter l'étape 3 ; et
l'étape 3 consiste **en ce que** la MMSG envoie le message MMS contenant le corps de message à un centre de service de messages multimédias (MMSC).

2. Procédé selon la revendication 1, **caractérisé en ce que**, avant l'étape de réception du message de dépôt MMS par la MMSG, le procédé consiste en outre **en ce que** :
l'expéditeur dépose le message de dépôt MMS pour envoyer le message MMS vers un ou plusieurs utilisateurs destinataires, où, si c'est la première fois qu'il envoie le message MMS, l'expéditeur transporte, dans le message de dépôt MMS envoyé, une identification indiquant que c'est la première fois qu'il envoie le message MMS, et le message de dépôt MMS envoyé comprend le corps de message du message MMS ; sinon
l'expéditeur transporte, dans le message de dépôt MMS envoyé, une identification indiquant que le message MMS a déjà été envoyé, et transporte l'identification premier message envoyé reçue dans le message de dépôt MMS, et le message de dépôt MMS envoyé ne comprend pas le corps de message du message MMS.

3. Procédé selon la revendication 1, **caractérisé en ce que** l'identification indiquant si c'est la première fois que l'expéditeur envoie le message MMS est transportée en ajoutant un champ pour indiquer un type de message dans le message de dépôt MMS.

4. Procédé selon la revendication 1, **caractérisé en ce que** l'étape qui consiste **en ce que** la MMSG génère l'identification premier message envoyé et renvoie l'identification premier message envoyé à l'expéditeur comprend :
la génération, par la MMSG, de l'identification premier message envoyé, et l'envoi de l'identification premier message envoyé à l'expéditeur en transportant l'identification premier message envoyé dans un message de réponse.

5. Procédé selon la revendication 1, **caractérisé en ce que**, après l'étape d'établissement de la relation correspondante entre l'identification premier message envoyé et le corps de message, le procédé consiste en outre à :
définir une période de validité pour la relation correspondante entre l'identification premier message envoyé et le corps de message, et après expiration de la période de validité, à supprimer la relation correspondante entre l'identification premier message envoyé et le corps de message.

6. Appareil de distribution d'un message de service de messages multimédias (MMS) qui se trouve dans une passerelle de service de messages multimédias (MMSG), **caractérisé en ce que** l'appareil comprend :
un module de réception (1), configuré pour recevoir un message de dépôt MMS envoyé par un expéditeur, le message de dépôt MMS transportant une identification indiquant si c'est la première fois que l'expéditeur envoie le message MMS déposé par le message de dépôt MMS ;
un module de détermination (2), configuré pour déterminer si c'est la première fois que l'expéditeur envoie le message MMS conformément à l'identification transportée dans le message de dépôt MMS, et si c'est le cas, il démarre un module de génération (3), sinon, il démarre un module d'obtention (6) ;
le module de génération (3), configuré pour générer une identification premier message envoyé ;
un module de stockage (4), configuré pour stocker une relation correspondante entre l'identification premier message envoyé générée par le module de génération (3) et un corps de message du message MMS déposé par le message de dépôt MMS reçu par le module de réception (1) ;
un premier module d'envoi (5), configuré pour envoyer l'identification premier message envoyé générée par le module de génération (3) à l'expéditeur ;
le module d'obtention (6), configuré pour obtenir, conformément à l'identification premier message envoyé transportée dans le message de dépôt MMS, le corps de message correspondant à l'identification premier message envoyé stockée par le module de stockage (4) ; et
un second module d'envoi (7), configuré pour envoyer le message MMS contenant le corps de message à un centre de service de messages multimédias (MMSC).

7. Appareil selon la revendication 6, **caractérisé en ce que** l'appareil est un processeur de services de la MMSG.

8. Appareil selon la revendication 6 ou 7, **caractérisé en ce que** le processeur de services comporte un port de mappage par le biais duquel l'expéditeur communique avec le processeur de services, et le port de mappage est différent des ports de mappage d'autres processeurs de services de la MMSG.

9. Système de distribution d'un message de service de messages multimédias (MMS), **caractérisé en ce que** le système comprend :
un expéditeur (51), configuré pour déposer un message de dépôt MMS pour envoyer un message MMS à un ou plusieurs utilisateurs destinataires, où, si c'est la première fois qu'il envoie le message MMS, alors le message de dépôt MMS transporte une identification indiquant que c'est la première fois qu'il envoie le message MMS, et le message de dépôt MMS comprend un corps de message du message MMS, et si ce n'est pas la première fois qu'il envoie le message MMS, alors le message de dépôt MMS transporte une identification indiquant que le message MMS a déjà été envoyé et une identification premier message envoyé, mais ne comprend pas le corps de message du message MMS, l'identification premier message envoyé correspondant au corps de message du message MMS qui est déposé par le message de dépôt MMS pour la première fois ; et
une passerelle de service de messages multimédias (MMSG) (53), configurée pour recevoir et traiter le message de dépôt MMS déposé par l'expéditeur (51), où, dans le cas où c'est la première fois qu'elle reçoit le message MMS déposé par le message de dépôt MMS, la MMSG (53) stocke le corps de message du message MMS, génère l'identification premier message envoyé, renvoie l'identification premier message envoyé à l'expéditeur (51), établit une relation correspondante entre l'identification premier message envoyé et le corps de message, et envoie le message MMS à un centre de service de messages multimédia (MMSC) ; et dans le cas où ce n'est pas la première fois qu'elle reçoit le message MMS déposé par le message de dépôt MMS, la MMSG (53) obtient l'identification premier message envoyé transportée dans le message de dépôt MMS et le corps de message correspondant à l'identification premier message envoyé, remet en paquets le message MMS et envoie le message MMS remis en paquets au MMSC.
